# EUROPEAN PATENT APPLICATION

(11) **EP 4 722 577 A1**
(43) Date of publication of application: **08.04.2026**
(21) Application number: 24815538.4
(22) Date of filing: 29.05.2024
(51) Int. Cl.: F16L 58/00, C02F 5/00, F16L 58/10, F28F 19/00, F28G 9/00

(54) **FLOW PASSAGE MAINTENANCE SYSTEM AND FLOW PASSAGE MAINTENANCE METHOD**

(30) Priority: 29.05.2023 JP 2023087658
(71) Applicant: National University Corporation Tokyo University of Marine Science and Technology, Minato-ku Tokyo 108-8477 (JP)
(72) Inventor: MORITA Motoaki, Tokyo 135-8533 (JP); IHARA Sota, Tokyo 135-8533 (JP)
(74) Representative: Slingsby Partners LLP
(86) International application number: PCT/JP2024/019786
(87) International publication number: WO 2024/248057

(57) **Abstract**

To suppress generation of scale on an inner wall of a flow path and/or corrosion of the inner wall of the flow path. A scale suppressing system 1 includes: piping 11 through which a hydrophilic liquid L1 flows; a storage part 12 that is disposed at an outlet of the piping 11 and stores the hydrophilic liquid L1 and a hydrophobic liquid L2 having a specific gravity different from a specific gravity of the hydrophilic liquid L1; circulation piping 13 having one end connected to a portion of the storage part 12 in which the hydrophobic liquid L2 is stored and another end connected to the piping 11; and a pump 14 that is disposed in the circulation piping 13 to generate a multiphase flow of the hydrophilic liquid L1 and the hydrophobic liquid L2 in the piping 11 by injecting the hydrophobic liquid L2 stored in the storage part 12 into the piping 11.

## Description

### Technical Field

The present invention relates to a flow path maintaining system and a flow path maintaining method, and more specifically, relates to a system and a method for suppressing generation of scale that adheres to an inner wall of a flow path through which a hydrophilic liquid flows and/or corrosion of the inner wall of the flow path.

### Background Art

It is known that scale adheres to an inner wall of a flow path through which a fluid flows. For example, scale adheres to inner walls of piping for guiding hot spring water to a predetermined place, piping for guiding cooling water to a power plant, and the like. Additionally, it is known that scale adheres to an inner wall of a flow path inside a heat exchanger.

Scale is generated when substances contained in a fluid are deposited on an inner wall of a flow path, or precipitated from the fluid and adhere to the inner wall of the flow path. For example, scale adhering to an inner wall of piping through which hot spring water flows is a metal oxide generated when calcium, silica components, and the like in the fluid are precipitated on the inner wall of the piping.

Patent Literature 1 describes that particles are put into a liquid flowing inside a heat transfer pipe to form a gas-liquid-solid three-phase flow of particles, gas, and cooling water in the pipe, thereby removing scale adhering to an inner surface of the heat transfer pipe.

Patent Literature 2 describes that fine air bubbles are mixed into a liquid flowing through piping, and that adhesion of scale to an inside of the piping is suppressed by utilizing the fact that negatively charged fine air bubbles attract positively charged calcium ions and the like.

Patent Literature 3 describes that adhesion of scale to piping is prevented by adding water to a part to which scale is expected to adhere, and diluting a washing filtrate of incineration ash.

Patent Literature 4 describes that adhesion of scale to an inner side of a secondary heat exchange part such as piping and an evaporator of a binary power generating device is prevented by feeding, to the secondary heat exchange part, a heat medium that has exchanged heat with heat source water so that the heat source water does not pass through the secondary heat exchange part of the binary power generating device.

Patent Literature 5 describes a cleaning method capable of cleaning an inner wall of a flow pipe. In this method, a liquid-liquid interface is moved while being brought into contact with the inner wall, thereby peeling off an object to be removed on the inner wall.

### Citation List

### Patent Literature

Patent Literature 1: Japanese Patent Laid-Open No. 5-180594
Patent Literature 2: Japanese Patent Laid-Open No. 2012-81370
Patent Literature 3: Japanese Patent Laid-Open No. 2015-123395
Patent Literature 4: Japanese Patent Laid-Open No. 2019-196854
Patent Literature 5: Japanese Patent Laid-Open No. 2020-179337

### Summary of Invention

### Technical Problem

It is an object of the present invention to provide a flow path maintaining system and a flow path maintaining method that can suppress generation of scale on an inner wall of a flow path and/or corrosion of the inner wall of the flow path.

### Solution to Problem

A flow path maintaining system according an aspect of the present invention includes:
a flow path through which a hydrophilic liquid flows;
a storage part that is disposed at an outlet of the flow path and stores the hydrophilic liquid and a hydrophobic liquid having a specific gravity different from that of the hydrophilic liquid;
a circulation flow path having one end connected to a portion of the storage part in which the hydrophobic liquid is stored and another end connected to the flow path; and
a pump that is disposed in the circulation flow path to generate a multiphase flow of the hydrophilic liquid and the hydrophobic liquid in the flow path by injecting the hydrophobic liquid stored in the storage part into the flow path.

In the flow path maintaining system, a distribution of at least one of both liquid phases of the hydrophilic liquid and the hydrophobic liquid may be continuous in the multiphase flow.

In the flow path maintaining system, the hydrophilic liquid may be a thermal fluid, a heat exchanger may be disposed in the flow path, and the circulation flow path may be connected to the flow path via a connection part on an upstream side of the heat exchanger.

The flow path maintaining system may further include a discharge pipe that discharges the hydrophilic liquid stored in the storage part.

In the flow path maintaining system, the circulation flow path may be connected to a lower part of the storage part and the discharge pipe may be connected to an upper part of the storage part when a specific gravity of the hydrophobic liquid is larger than a specific gravity of the hydrophilic liquid, and the circulation flow path may be connected to the upper part of the storage part and the discharge pipe may be connected to the lower part of the storage part when the specific gravity of the hydrophobic liquid is smaller than the specific gravity of the hydrophilic liquid.

The flow path maintaining system may further include stirring means that is disposed in the flow path and stirs a mixed liquid of the hydrophilic liquid and the hydrophobic liquid.

In the flow path maintaining system, the hydrophobic liquid may be a nonpolar solvent.

In the flow path maintaining system, the hydrophilic liquid may be a corrosive solution, and a material of the flow path may be a corrosive material.

In the flow path maintaining system, the flow path may be constituted of a hydrophobic material, or an inner wall of the flow path may be coated with a hydrophobic material.

In a flow path maintaining method according to an aspect of the present invention, a hydrophobic liquid having a specific gravity different from that of a hydrophilic liquid is injected into a flow path through which the hydrophilic liquid flows, thereby forming a multiphase flow of the hydrophilic liquid and the hydrophobic liquid in the flow path.

In the flow path maintaining method, a distribution of at least one of both liquid phases of the hydrophilic liquid and the hydrophobic liquid may be continuous in the multiphase flow.

In the flow path maintaining method, a mixed liquid of the hydrophilic liquid and the hydrophobic liquid flowed out from the flow path may be separated into the hydrophilic liquid and the hydrophobic liquid, and the separated hydrophobic liquid may be re-injected into the flow path.

In the flow path maintaining method, the mixed liquid of the hydrophilic liquid and the hydrophobic liquid flowing through the flow path may be stirred.

In the flow path maintaining method, the hydrophobic liquid may be a nonpolar solvent.

In the flow path maintaining method, the hydrophilic liquid may be a thermal fluid, and the thermal fluid may flow through a heat exchanger disposed in the flow path.

### Advantageous Effects of Invention

The present invention can provide a flow path maintaining system and a flow path maintaining method that can suppress generation of scale on an inner wall of a flow path and/or corrosion of the inner wall of the flow path.

### Brief Description of Drawings

[Figure 1] Figure 1 is a diagram illustrating a schematic configuration of a scale suppressing system (flow path maintaining system) according to a first embodiment.
[Figure 2] Figure 2 is an SEM image obtained by observing an inner wall of a silicon tube.
[Figure 3] Figure 3 is a diagram illustrating a schematic configuration of a scale suppressing system (flow path maintaining system) according to a second embodiment.
[Figure 4] Figure 4 is a flowchart for explaining an example of a scale suppressing method (flow path maintaining method) according to an embodiment.
[Figure 5] Figure 5 is an example of a photograph obtained by photographing a multiphase flow (turbulent flow) flowing inside transparent piping.

### Description of Embodiments

The following describes embodiments according to the present invention with reference to the drawings.

### (First embodiment)

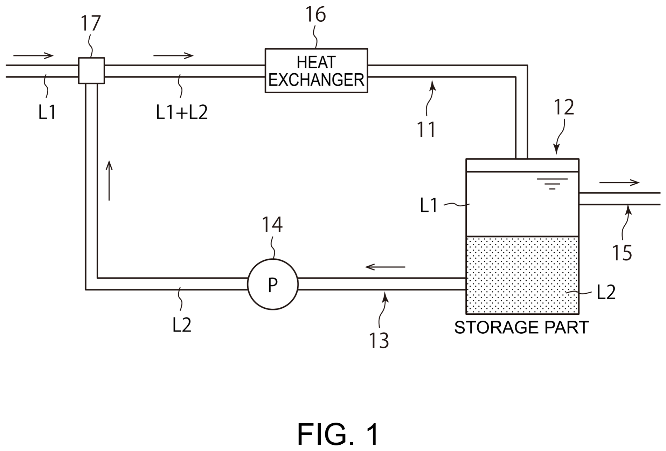

With reference to Figure 1, the following describes a scale suppressing system 1 according to the present embodiment. The scale suppressing system 1 is configured as a flow path maintaining system that maintains a flow path by suppressing generation of scale that adheres to an inner wall of piping 11 in which a hydrophilic liquid flows, or suppressing corrosion of the inner wall of the piping 11.

The scale suppressing system 1 includes the piping 11, a storage part 12, circulation piping 13, a pump 14, a discharge pipe 15, a heat exchanger 16, and a connection part 17. The following describes each of the constituent elements in detail.

The piping 11 is a flow path through which a hydrophilic liquid L1 flows. In the present embodiment, the hydrophilic liquid L1 is a thermal fluid, and is, for example, heat source water such as hot spring water pumped up from a thermal fluid source. The hydrophilic liquid L1 may be a corrosive solution. A material of the piping 11 is not particularly limited, and may be carbon steel, for example. The piping 11 may be a heat transfer pipe. Alternatively, the piping 11 may be a tube made of resin and the like, a flexible pipe that can be freely bent, and the like. The piping 11 is an example of a flow path in Claims.

The heat exchanger 16 utilizing a thermal fluid is disposed in the piping 11. A type of the heat exchanger 16 is not particularly limited, and may be, for example, a multitubular heat exchanger, a plate heat exchanger, a spiral heat exchanger, or the like. The heat exchanger 16 is not an essential configuration, so that the heat exchanger 16 is not necessarily disposed in the piping 11. A flow path in the heat exchanger 16 is an example of a flow path in Claims.

The storage part 12 is disposed at an outlet of the piping 11, and a liquid that has flowed through the piping 11 flows into the storage part 12. The liquid that flows into the storage part 12 is a mixed liquid of the hydrophilic liquid L1 and a hydrophobic liquid L2. The mixed liquid of the present application does not include an emulsion.

The hydrophobic liquid L2 has a specific gravity different from that of the hydrophilic liquid L1. Due to this, the mixed liquid flowed from the piping 11 into the storage part 12 is separated into the hydrophilic liquid L1 and the hydrophobic liquid L2. In the present embodiment, the specific gravity of the hydrophobic liquid L2 is larger than the specific gravity of the hydrophilic liquid L1.

As illustrated in Figure 1, the piping 11 is connected to an upper surface (lid) of the storage part 12. The piping 11 may be connected to a side surface of the storage part 12. When a lid is not disposed on the storage part 12, the piping 11 is not connected to the storage part 12, and the outlet of the piping 11 may be disposed above the storage part 12.

The storage part 12 stores the hydrophilic liquid L1 and the hydrophobic liquid L2 having a specific gravity larger than that of the hydrophilic liquid L1. Due to a difference in the specific gravity, the hydrophobic liquid L2 is accumulated in a lower part of the storage part 12.

The hydrophobic liquid L2 is not particularly limited as long as it is a liquid having hydrophobicity. For example, the hydrophobic liquid L2 is a nonpolar solvent such as silicone oil, a hydrocarbon compound, an aromatic hydrocarbon, an aromatic compound, a heterocyclic compound, a fluorine-based solvent, a chlorine-based solvent, or a bromine-based solvent. Specific examples of the hydrophobic liquid L2 include Novec (registered trademark), Fluorinert, paraffin-based base oil, naphthene-based base oil, trichloroethylene, dichloromethane, perchloroethylene, 1-bromopropane, and the like. When the hydrophilic liquid L1 is a thermal fluid, the hydrophobic liquid L2 may be a nonflammable or flame-resistant liquid.

The circulation piping 13 is a flow path having one end connected to the storage part 12 and another end connected to the piping 11. Specifically, one end of the circulation piping 13 is connected to a portion of the storage part 12 in which the hydrophobic liquid L2 is stored so that the hydrophobic liquid L2 flows into the circulation piping 13. In the present embodiment, the circulation piping 13 is connected to the lower part of the storage part 12 (a lower side surface or a bottom surface of the storage part 12). The other end of the circulation piping 13 is connected to the piping 11 via the connection part 17 on an upstream side of the heat exchanger 16. The circulation piping 13 may be a tube made of resin and the like, a flexible pipe that can be freely bent, or the like. The circulation piping 13 is an example of a circulation flow path in Claims. The connection part 17 is, for example, a branch joint.

The pump 14 is disposed in the circulation piping 13, and injects the hydrophobic liquid L2 stored in the storage part 12 into the piping 11. That is, when the pump 14 operates, the hydrophobic liquid L2 stored in the storage part 12 is injected into the piping 11 through the circulation piping 13. As a result, a multiphase flow (liquid-liquid two-phase flow) of the hydrophilic liquid L1 and the hydrophobic liquid L2 is formed in the piping 11. In this multiphase flow, it is desirable that a distribution of at least one of both liquid phases of the hydrophilic liquid L1 and the hydrophobic liquid L2 be continuous. That is, in the multiphase flow of the present application, it is desirable that distributions of both liquid phases (distributions in a longitudinal direction of the piping 11) be such that both liquid phases are continuous, or one of the liquid phases is continuous and the other liquid phase is discontinuous. With such a multiphase flow, contact between the hydrophobic liquid L2 and the inner wall of the piping 11 can be ensured and/or a surface area of an interface between both liquids, where scale particles tend to stay, can be increased. As a result, improvement of an effect of suppressing scale generation and/or corrosion can be expected. Furthermore, since the hydrophobic liquid L2 injected into the piping 11 is efficiently warmed by a thermal fluid of the hydrophilic liquid L1, a decrease in efficiency of the heat exchanger 16 caused by injection of the hydrophobic liquid L2 can be suppressed. The multiphase flow may also be a three-phase flow including a gas phase. For example, when the hydrophilic liquid L1 is heat source water, the multiphase flow in the piping 11 may include, in addition to both liquid phases of the hydrophilic liquid L1 and the hydrophobic liquid L2, vapor (gas phase) of the hydrophilic liquid L1.

The above multiphase flow may be a laminar flow or a turbulent flow. In a case of the laminar flow, it is desirable that the hydrophobic liquid L2 be in a spiral shape. Also, in a case of the piping 11 having a large diameter, it is desirable that the multiphase flow be a turbulent flow so that the hydrophobic liquid L2 sufficiently contacts the inner wall of the piping 11.

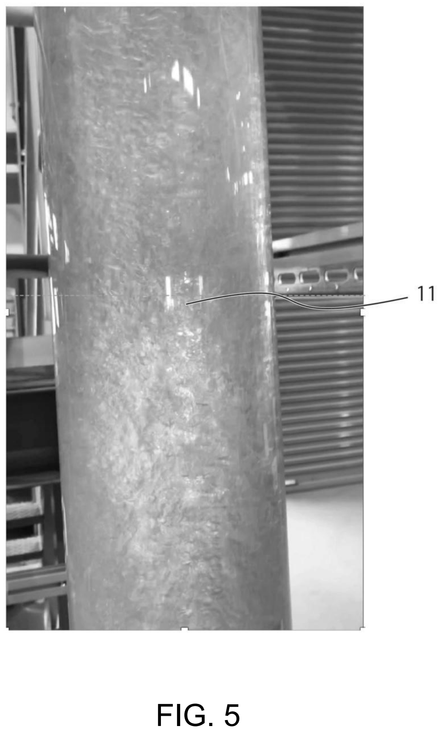

Figure 5 is an example of a photograph obtained by photographing a multiphase flow flowing through the piping 11 made of polycarbonate of an evaluation system installed in a laboratory. The piping 11 is a transparent tube having an inner diameter of about 100 mm. As can be seen from this photograph, a turbulent flow is formed in the transparent tube. In this example, the hydrophilic liquid L1 is hot spring water, the hydrophobic liquid L2 is Fluorinert FC3283, and a ratio of the hydrophilic liquid L1 to the hydrophobic liquid L2 is 1:3.

The pump 14 is not necessarily always operated, but may be intermittently operated, or may be operated only at the time of cleaning of the piping 11. When the liquid in the storage part 12 is not separated into the hydrophilic liquid L1 and the hydrophobic liquid L2, the pump 14 may be stopped until separation occurs. Additionally, when the hydrophilic liquid L1 and the hydrophobic liquid L2 are emulsified, a salt that promotes separation of both liquids from an emulsified state may be added to the storage part 12 or the like.

When it is necessary to prevent the hydrophobic liquid L2 injected into the piping 11 by the pump 14 from flowing back to an upstream side of the piping 11, a pump or a check valve may be disposed on an upstream side of the connection part 17 of the piping 11.

The discharge pipe 15 is piping for discharging the hydrophilic liquid L1, which has flowed through the piping 11, to a drain ditch or the like. The discharge pipe 15 discharges the hydrophilic liquid L1 stored in the storage part 12. The discharge pipe 15 is connected to a portion of the storage part 12 in which the hydrophilic liquid L1 is stored so that the hydrophilic liquid L1 flows into the discharge pipe 15. In the present embodiment, the discharge pipe 15 is connected to an upper part of the storage part 12. The discharge pipe 15 is not an essential configuration. For example, a discharge hole may be disposed in the lid of the storage part 12, and the hydrophilic liquid L1 may be discharged to the outside through the hole.

The hydrophobic liquid L2 may also be a liquid having a specific gravity smaller than that of the hydrophilic liquid L1, such as silicone oil, paraffin-based oil, or naphthene-based oil. In this case, the circulation piping 13 is connected to an upper part of the storage part 12, and the discharge pipe 15 is connected to a lower part of the storage part 12.

As described above, according to the present embodiment, the hydrophobic liquid L2 is injected into the piping 11 through which the hydrophilic liquid L1 flows, and the multiphase flow of the hydrophilic liquid L1 and the hydrophobic liquid L2 is formed in the piping 11. The multiphase flow flows through the piping 11 toward the storage part 12. Due to this, since contact of the hydrophilic liquid L1 with the inner wall of the piping 11 is reduced, generation of scale on the inner wall of the piping 11 can be suppressed. It is also possible to suppress scale over substantially the entire piping 11, not only a part of the piping 11.

Additionally, according to the present embodiment, since scale adhered to the inner wall of the piping 11 is scraped off by the hydrophobic liquid L2 having a relatively large specific gravity, the piping 11 can be cleaned. Furthermore, since scale adhered to an inner wall of the flow path of the heat exchanger 16 is scraped off by the hydrophobic liquid L2, the flow path in the heat exchanger 16 can be cleaned. According to the present embodiment, since the hydrophobic liquid L2 contained in the mixed liquid always contacts the inner wall of the flow path, a function of scraping off scale can be constantly generated. An advantage is also provided in that it is not necessary to stop a flow of the hydrophilic liquid such as heat source water in order to fill the flow path with a cleaning liquid.

According to the present embodiment, it is not necessary to stop the flow of the hydrophilic liquid L1, so that an operating rate of the heat exchanger 16 can be improved.

According to the present embodiment, the mixed liquid that has flowed through the piping 11 is stored in the storage part 12, and the hydrophobic liquid L2 separated from the mixed liquid due to a difference in specific gravity is re-injected into the piping 11. In this manner, the hydrophobic liquid L2 is recovered and reused, so that running costs of the scale suppressing system 1 can be reduced. Additionally, since outflow of the hydrophobic liquid L2 to the outside of the scale suppressing system 1 is suppressed, tolerance for using, as the hydrophobic liquid L2, a liquid having a relatively large environmental load can be increased.

The flow path maintaining system of the present embodiment can be constructed without making a large change in an existing flow path. For example, in a case where the piping 11 is already installed, the flow path maintaining system can be easily constructed at low cost by adding the storage part 12, the circulation piping 13, and the pump 14.

Additionally, according to the present embodiment, since the hydrophobic liquid L2 comes into contact with the inner wall of the piping 11, corrosion of the piping 11 can be suppressed. Furthermore, since the hydrophobic liquid L2 comes into contact with the inner wall of the flow path of the heat exchanger 16, corrosion of the inner wall of the flow path of the heat exchanger 16 can be suppressed.

From a viewpoint of a piping maintaining effect, it is preferable that the multiphase flow flowing through the piping 11 be a spiral laminar flow (spiral flow) or a turbulent flow. To cause the multiphase flow to be the turbulent flow, a ratio of the hydrophobic liquid L2 in the mixed liquid of the hydrophilic liquid L1 and the hydrophobic liquid L2 may be made higher than that of the hydrophilic liquid L1. For example, a ratio of the hydrophilic liquid L1 to the hydrophobic liquid L2 is set to 1:3. By making the ratio of the hydrophobic liquid L2 higher, contact between the hydrophobic liquid L2 and the inner wall of the piping 11 can be ensured, and/or the surface area of the interface between both liquids, where scale particles tend to stay, can be increased, so that improvement in a suppression effect can be expected.

The piping 11 may be constituted of a hydrophobic material, or the inner wall of the piping 11 may be coated with a hydrophobic material. Due to this, since the hydrophobic liquid L2 more easily comes into contact with the inner wall of the piping 11, generation of scale on the inner wall of the flow path and/or corrosion of the inner wall of the flow path can be further suppressed. The hydrophobic material is, for example, silicone, a fluorine compound, paraffin, polypropylene, or the like. When the hydrophilic liquid L1 is a corrosive solution, or when the hydrophobic liquid L2 contains a scale component, a hydrophilic material may be used for a material of the piping 11 and/or for a coating of the inner wall.

### <Experiment result 1>

The following describes an experiment result obtained by examining an effect of suppressing scale by the evaluation system. In the evaluation system, a heat-resistant silicon tube (diameter: 4 mm) was used as the piping 11, hot spring water was used as the hydrophilic liquid L1, and Novec (Novec 7300) was used as the hydrophobic liquid L2. The hot spring water was flowed through the silicon tube at room temperature for about one day.

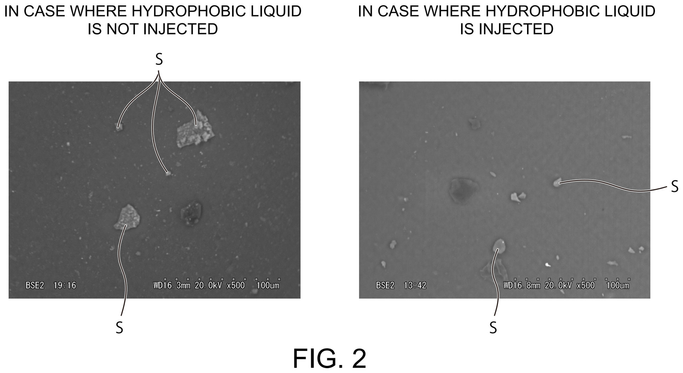

Figure 2 illustrates an experiment result, and is an image obtained by cutting and opening the silicon tube and observing the inner wall with a Scanning Electron Microscope (SEM), in a case where the hydrophobic liquid L2 was injected (right figure) and in a case where the hydrophobic liquid L2 was not injected (left figure). From Figure 2, it is apparent that an amount of scale S adhered to the inner wall is smaller in the case where the hydrophobic liquid L2 is injected.

### <Experiment result 2>

Next, the following describes an experiment result obtained by examining an effect of suppressing corrosion of the piping by the evaluation system. In the evaluation system, a carbon steel pipe (SGP black steel pipe, size 10A) made of a corrosive material was used as the piping 11, a corrosive solution (hydrochloric acid solution having a concentration of 3%) was used as the hydrophilic liquid L1, and Fluorinert (FC3283) was used as the hydrophobic liquid L2. The hydrophilic liquid L1 and the hydrophobic liquid L2, in a mixed state such that a ratio thereof was 1:1, were flowed (circulated) through the carbon steel pipe at room temperature for 90 hours. Thereafter, a weight of the carbon steel pipe was measured, and a difference (decrease amount) from a weight before the experiment was obtained.

Table 1 shows an experiment result. In Table 1, "Conventional" indicates a result in a case where the hydrophobic liquid L2 was not flowed, and "Embodiment" indicates a result in a case where the hydrophobic liquid L2 was flowed together with the hydrophilic liquid L1. From this result, it is found that reduction in weight due to corrosion was significantly decreased in the embodiment as compared with the conventional case. In this manner, by flowing the mixed liquid of the hydrophilic liquid (corrosive solution) and the hydrophobic liquid, a time during which the corrosive solution contacts a surface of the piping is reduced, so that corrosion of the piping can be suppressed.

### [Table 1]

**TABLE 1**

| | CONVENTIONAL | EMBODIMENT |
|---|---|---|
| BEFORE EXPERIMENT | 86.139g | 87.979g |
| AFTER EXPERIMENT | 84.471g | 86.937g |
| DECREASE AMOUNT | 1.668g | 1.042g |

### (Second embodiment)

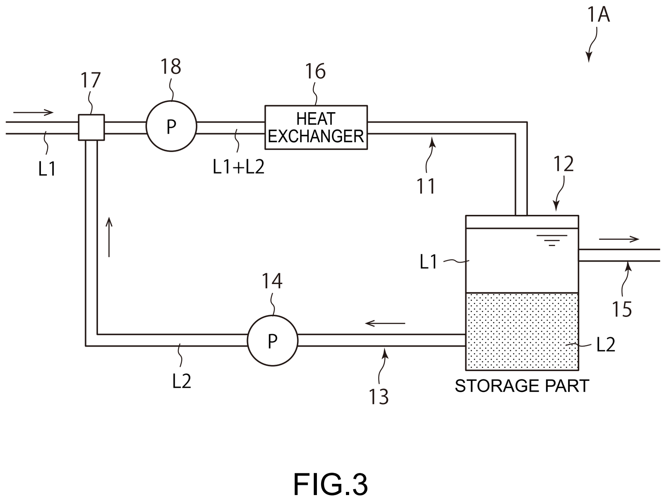

Next, the following describes a scale suppressing system 1A according to a second embodiment with reference to Figure 3. Similarly to the first embodiment, the scale suppressing system 1A is configured as a flow path maintaining system. In Figure 3, constituent elements having functions equivalent to those of the first embodiment are denoted by the same reference numerals as in Figure 1.

A difference between the first embodiment and the second embodiment is that, in the second embodiment, a pump for stirring the mixed liquid is disposed in the piping 11. The following describes the second embodiment focusing on the difference.

The scale suppressing system 1A includes the piping 11, the storage part 12, the circulation piping 13, the pump 14, the discharge pipe 15, the heat exchanger 16, the connection part 17, and a pump 18. The configurations other than the pump 18 are the same as those in the first embodiment.

The pump 18 is disposed in the piping 11. Specifically, the pump 18 is disposed between the heat exchanger 16 and the connection part 17, and stirs the mixed liquid of the hydrophilic liquid L1 and the hydrophobic liquid L2 flowing through the piping 11. The pump 18 is an example of stirring means in Claims.

When the mixed liquid is stirred by the pump 18, the hydrophobic liquid L2 is dispersed, and more easily comes into contact with the inner wall of the piping 11. As a result, generation of scale on the inner wall of the piping 11 and/or corrosion of the inner wall of the piping 11 can be further suppressed. According to the second embodiment, even when a diameter of the piping 11 is relatively large, contact between the hydrophobic liquid L2 and the inner wall of the piping 11 can be more easily ensured, and/or the surface area of the interface between both liquids can be increased, so that generation of scale and/or corrosion of the piping can be effectively suppressed.

Any means capable of stirring the mixed liquid may be used, and the pump 18 is not necessarily disposed. For example, the mixed liquid may be stirred by rotating a stirrer having a plate shape, a propeller shape, and the like in the piping 11. Alternatively, a baffle plate that blocks the flow of the mixed liquid may be disposed at the connection part 17 and the like. Such a stirrer is an example of stirring means in Claims.

To prevent the mixed liquid stirred by the pump 18 from flowing back to the upstream side of the piping 11, a pump or a check valve may be disposed on the upstream side of the connection part 17 of the piping 11.

### <Flow path maintaining method>

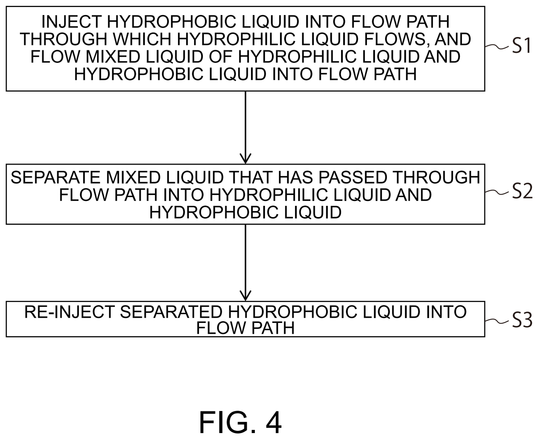

Next, the following describes an example of a flow path maintaining method according to the embodiment with reference to a flowchart in Figure 4.

Step S1: The hydrophobic liquid is injected into the flow path such as the piping through which the hydrophilic liquid flows, and the mixed liquid of the hydrophilic liquid and the hydrophobic liquid is flowed in the flow path. Specifically, in the scale suppressing system 1, the pump 14 is operated to draw the hydrophobic liquid L2 stored in the storage part 12 into the circulation piping 13, and inject it into the piping 11 from the connection part 17. Due to this, the mixed liquid of the hydrophilic liquid L1 and the hydrophobic liquid L2 flows through the piping 11.

Step S2: The mixed liquid that has passed through the flow path is separated into the hydrophilic liquid and the hydrophobic liquid. Specifically, in the scale suppressing system 1, the mixed liquid flowed out from the piping 11 is left to stand in the storage part 12, and is separated into the hydrophilic liquid L1 and the hydrophobic liquid L2. In the present embodiment, since the hydrophobic liquid L2 has a larger specific gravity than that of the hydrophilic liquid L1, when the mixed liquid is left to stand, the hydrophobic liquid L2 accumulates in the lower part of the storage part 12.

Step S3: The separated hydrophobic liquid is re-injected into the flow path. Specifically, in the scale suppressing system 1, the hydrophobic liquid L2 separated from the hydrophilic liquid L1 in the storage part 12 is re-injected into the piping 11 via the circulation piping 13.

The above method is merely an example, and various modifications can be made. For example, at Step S2, scale flowed from the piping 11 may stay in a vicinity of a boundary between the hydrophilic liquid L1 and the hydrophobic liquid L2 stored in the storage part 12. A step of removing this scale may be provided.

Step S2 may be omitted. That is, the hydrophobic liquid L2 may be injected into the piping 11 before the mixed liquid flowed into the storage part 12 is separated into the hydrophilic liquid L1 and the hydrophobic liquid L2. When a capacity of the storage part 12 is sufficiently large as compared with an amount of the liquid flowing out from the piping 11, or when the circulation piping 13 is connected to the bottom surface of the storage part 12, that is, when an inlet of the circulation piping 13 is always in contact with the hydrophobic liquid L2, the hydrophobic liquid L2 can be drawn into the circulation piping 13 without waiting for the mixed liquid flowed into the storage part 12 to be separated into the hydrophilic liquid L1 and the hydrophobic liquid L2.

At Step S1, the mixed liquid of the hydrophilic liquid L1 and the hydrophobic liquid L2 may be stirred. In this case, in the scale suppressing system 1A, the mixed liquid is stirred by the pump 18 disposed in the piping 11. The mixed liquid may be stirred by stirring means other than the pump.

Based on the above description, those skilled in the art may conceive additional effects and various modifications of the present invention, but aspects of the present invention are not limited to the embodiments described above. Various additions, modifications, and partial deletions can be made without departing from the conceptual spirit and scope of the present invention derived from the matters defined in Claims and equivalents thereof.

### Reference Signs List

1, 1A scale suppressing system
11 piping
12 storage part
13 circulation piping
14, 18 pump
15 discharge pipe
16 heat exchanger
17 connection part
L1 hydrophilic liquid
L2 hydrophobic liquid

## Claims

1. A flow path maintaining system comprising:
a flow path through which a hydrophilic liquid flows;
a storage part that is disposed at an outlet of the flow path and stores the hydrophilic liquid and a hydrophobic liquid having a specific gravity different from a specific gravity of the hydrophilic liquid;
a circulation flow path having one end connected to a portion of the storage part in which the hydrophobic liquid is stored and another end connected to the flow path; and
a pump that is disposed in the circulation flow path to generate a multiphase flow of the hydrophilic liquid and the hydrophobic liquid in the flow path by injecting the hydrophobic liquid stored in the storage part into the flow path.

2. The system according to claim 1, wherein a distribution of at least one of both liquid phases of the hydrophilic liquid and the hydrophobic liquid is continuous in the multiphase flow.

3. The system according to claim 1, wherein the hydrophilic liquid is a thermal fluid, a heat exchanger is disposed in the flow path, and the circulation flow path is connected to the flow path via a connection part on an upstream side of the heat exchanger.

4. The system according to claim 1, further comprising a discharge pipe that discharges the hydrophilic liquid stored in the storage part.

5. The system according to claim 4, wherein
the circulation flow path is connected to a lower part of the storage part and the discharge pipe is connected to an upper part of the storage part when the specific gravity of the hydrophobic liquid is larger than the specific gravity of the hydrophilic liquid, and
the circulation flow path is connected to the upper part of the storage part and the discharge pipe is connected to the lower part of the storage part when the specific gravity of the hydrophobic liquid is smaller than the specific gravity of the hydrophilic liquid.

6. The system according to any one of claims 1 to 5, further comprising stirring means that is disposed in the flow path and stirs a mixed liquid of the hydrophilic liquid and the hydrophobic liquid.

7. The system according to claim 1, wherein the hydrophobic liquid is a nonpolar solvent.

8. The system according to claim 1, wherein the hydrophilic liquid is a corrosive solution, and a material of the flow path is a corrosive material.

9. The system according to claim 1, wherein the flow path is constituted of a hydrophobic material, or an inner wall of the flow path is coated with a hydrophobic material.

10. A flow path maintaining method comprising: injecting a hydrophobic liquid having a specific gravity different from a specific gravity of a hydrophilic liquid into a flow path through which the hydrophilic liquid flows, thereby forming a multiphase flow of the hydrophilic liquid and the hydrophobic liquid.

11. The method according to claim 10, wherein a distribution of at least one of both liquid phases of the hydrophilic liquid and the hydrophobic liquid is continuous in the multiphase flow.

12. The method according to claim 10, comprising: separating a mixed liquid of the hydrophilic liquid and the hydrophobic liquid flowed out from the flow path into the hydrophilic liquid and the hydrophobic liquid, and re-injecting the separated hydrophobic liquid into the flow path.

13. The method according to claim 10, comprising: stirring a mixed liquid of the hydrophilic liquid and the hydrophobic liquid flowing through the flow path.

14. The method according to claim 10, wherein the hydrophobic liquid is a nonpolar solvent.

15. The method according to any one of claims 10 to 14, wherein the hydrophilic liquid is a thermal fluid, and the thermal fluid flows through a heat exchanger disposed in the flow path.
